# EUROPEAN PATENT APPLICATION

(11) **EP 1 323 614 A1**
(43) Date of publication of application: **02.07.2003**
(21) Application number: 02080685.7
(22) Date of filing: 16.12.2002
(51) Int. Cl.: B62B 7/08

(54) **Collapsible infant stroller**

(30) Priority: 27.12.2001 NL 1019664
(71) Applicant: All Our Kids Europe B.V., 6224 LJ Maastricht (NL)
(72) Inventor: Bost, Bart Willem Jozef, 6221 EW Maastricht (NL)
(74) Representative: Voncken, Bartholomeus Maria Christiaan

(57) **Abstract**

There is disclosed a collapsible infant stroller comprising a frame which consists of a left-hand frame half (3) and a right-hand frame half (4) connected thereto, which frame halves accommodate a seat member (16) for a child between them and which carry front and rear wheels (1,2) at their bottom sides, in which a frame half is substantially built up of a four-sided linkage consisting of a pusher tube (8), a front leg (10) connected thereto by means of a first pivot (9), a rear leg (12) connected to the pusher tube (8) by means of a second pivot (11), and a connecting tube (15) which is on the one hand connected to the front leg by means of a third pivot (13) and which is on the other hand connected to the rear leg by means of a fourth pivot (14), and in which means are used for locking the first pivot in position, for example in a position in which the pusher tube and the front leg are substantially aligned. The means for locking the first pivot (9) include a stabilisation member for effecting a fixed connection in the aforesaid position between a part of the pusher tube (8) or the front leg (10) located in the immediate vicinity of the first pivot (9) on the one hand and the connecting tube (15) or the rear leg (12) on the other hand.

## Description

The invention relates to a collapsible infant stroller comprising a frame which consists of a left-hand frame half and a right-hand frame half connected thereto, which frame halves accommodate a seat member for a child between them and which carry front and rear wheels at their bottom sides, in which a frame half is substantially built up of a four-sided linkage consisting of a pusher tube, a front leg connected thereto by means of a first pivot, a rear leg connected to the pusher tube by means of a second pivot, and a connecting tube which is on the one hand connected to the front leg by means of a third pivot and which is on the other hand connected to the rear leg by means of a fourth pivot, and in which means are used for locking the first pivot in position, for example in a position in which the pusher tube and the front leg are substantially aligned.

The use of the aforesaid pivots between frame parts positioned adjacently to each other makes it possible to fully collapse and unfold the frame of the infant stroller. In the unfolded position, the pusher tube and the front leg are substantially aligned, and the intermediate first pivot is locked in position, for example by means of a movable pin which interconnects the adjoining ends of the pusher tube and the front leg. By locking said first pivot in position in this manner, the pusher tube and the front leg are in principle transformed into a single frame part, which, together with the rear leg and the connecting tube, forms a non-deformable triangle that is to give the infant stroller a stable position in the fully unfolded position.

One drawback of known infant strollers of this type, however, is the fact that the means for locking the first pivot in position cannot fully prevent movement to a certain extent of said first pivot in the locked position, resulting in play between the pivotally connected frame parts. This does not have a positive effect on the handling characteristics and the comfort of a known infant stroller of this type.

In view of the foregoing it is an object of the present invention to further improve a collapsible infant stroller of the present type.

Accordingly, the invention proposes a collapsible infant stroller comprising a frame which consists of a left-hand frame half and a right-hand frame half connected thereto, which frame halves accommodate a seat member for a child between them and which carry front and rear wheels at their bottom sides, in which a frame half is substantially built up of a four-sided linkage consisting of a pusher tube, a front leg connected thereto by means of a first pivot, a rear leg connected to the pusher tube by means of a second pivot, and a connecting tube which is on the one hand connected to the front leg by means of a third pivot and which is on the other hand connected to the rear leg by means of a fourth pivot, and in which means are used for locking the first pivot in position, for example in a position in which the pusher tube and the front leg are substantially aligned, characterized in that said means include a stabilisation member for effecting a fixed connection in the aforesaid position between a part of the pusher tube or the front leg located in the immediate vicinity of the first pivot on the one hand and the connecting tube or the rear leg on the other hand.

The first pivot is given additional stability by effecting the aforesaid fixed connection, as a result of which an undesirable movement of said first pivot, and consequently of the frame, in the fully unfolded position of the infant stroller (in which the pusher tube and the front leg are substantially aligned, for example) is avoided.

Of course, the degree of stabilisation imparted by the stabilisation member depends on the geometry of the frame and on the position of the stabilisation member. In a preferred embodiment of the infant stroller according to the invention, the stabilisation member extends between the front leg and the rear leg in the aforesaid position. One end of the stabilisation member is connected to the front leg near the first pivot in that case, whilst the opposite end of the stabilisation member is connected to the rear leg.

Furthermore it is advantageous if the stabilisation member is pivotally connected to the aforesaid part of the pusher tube or the front leg with a first end, whilst the second end of said stabilisation member and the connecting tube or the rear leg are provided with locking means which cooperate in the aforesaid position. Said locking means cooperate with each other in the fully unfolded position of the infant stroller. When the infant stroller is to be moved to a collapsed position, the locking means are unlocked and the stabilisation member will pivot about its first end during said collapsing of the infant stroller.

Various constructions of the locking means are possible. According to one possible constructional solution, the locking means consist of a spring-loaded locking pin, which can be received in a corresponding receiving hole. The locking pin is retained in said corresponding receiving hole under the influence of the spring load, so that the locked position is maintained in a reliable manner.

The locking pin may thus form part of the stabilisation member, and said receiving hole may be formed in the connecting tube or in the rear leg. But also the reverse (the locking pin being present on the connecting tube or on the rear leg and the receiving hole being present in the stabilisation member) is possible.

The ease of use of the infant stroller (and in particular the ease with which it can be collapsed) can be considerably enhanced if the locking pin can be moved against the spring load by an operating element in order to be unlocked. Operation of the operating element will cause the locking pin to move out of the receiving hole, after which the infant stroller can be collapsed in a simple manner.

A non-limitative example of such an operating element is a foot pedal connected to the locking pin by means of a pull cable. A user can press the foot pedal with a foot, so that both hands will remain free for collapsing the infant stroller.

The ease of use of the infant stroller according to the invention, in particular in an embodiment in which the aforesaid cooperating locking means are used, can be enhanced even further if guide means are used for positioning the cooperating locking means relative to each other. In this way, movement of the infant stroller from a collapsed position to an unfolded position will automatically lead to a correct interlocking engagement of said cooperating locking means, so that said locking will take place automatically.

If a combination of a locking pin and a receiving hole as mentioned in the foregoing is used, for example, it is possible to use a lead-in for the locking pin as the guide means. Said lead-in ensures that the locking pin will be placed exactly opposite the receiving hole upon unfolding of the infant stroller.

Alternatively, or in addition to such a lead-in, it is possible to use a spring member, such as a torsion spring, as the guide means, which spring member loads the stabilisation member in the direction of a pivoted position defined by a stop. In that case the stop, in combination with the spring member, determines a defined position of the stabilisation member, and thus of the locking pin, in the unfolded position of the infant stroller. Said stop might be a flexible pull element, for example, which forms a connection between the stabilisation member and a part of the frame that is located thereabove in a position of use of the infant stroller. In such cases the torsion spring exerts a force on the stabilisation member, which force acts in the same direction as the force of gravity during normal use of the infant stroller, so that both forces move the stabilisation member downwards as far as the flexible pull element allows. Upon collapsing of the infant stroller, the stabilisation member is moved against the action of the torsion spring to a position in which the flexible pull element is collapsed.

The stabilisation member which is used in accordance with the invention for stabilising the first pivot between the pusher tube and the front leg may be a simple rod. It is convenient, however, if the stabilisation member forms part of the seat member, so that the seat member will have a dual function. In this way it is possible to minimise the number of parts of the infant stroller, and consequently the technical complexity and the weight thereof.

The invention will now be explained in more detail with reference to the drawing, which shows an embodiment of the infant stroller according to the invention.

In the drawing:
Fig. 1 shows a perspective view of an embodiment of the infant stroller according to the invention in a fully unfolded position thereof;
Fig. 2 shows the infant stroller of Fig. 1 in a partially collapsed position;
Fig. 3 is a larger-scale side elevation of a detail of the infant stroller of Fig. 2, showing a fully unfolded position;
Fig. 4 shows the detail of Fig. 3, showing a partially collapsed position;
Fig. 5 is a view of the detail of Fig. 3, showing a fully collapsed position;
Fig. 6 is a larger-scale view of the detail indicated at VI in Fig. 2;
Fig. 7 is a perspective bottom view of a part of the infant stroller of Fig. 1; and
Fig. 8 is a larger-scale view of the detail indicated at VIII in Fig. 2.

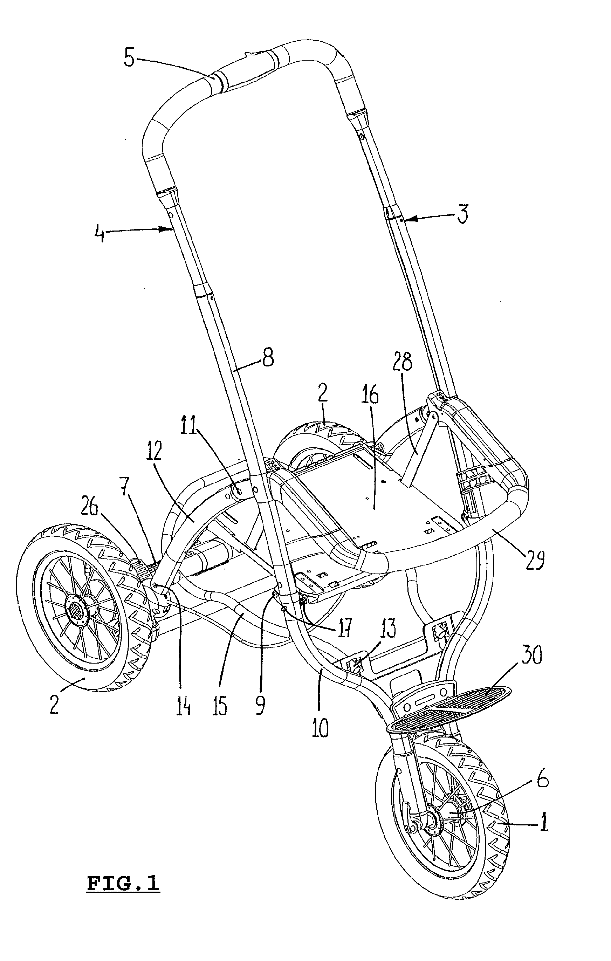

The collapsible infant stroller that is shown in Fig. 1 consists of a frame provided with a front wheel 1 and rear wheels 2. The front wheel 1 may also be in the form of twin wheels. The frame is built up of a left-hand frame half 3 and a right-hand frame half 4 connected thereto. The connection between the frame halves takes place inter alia by means of a handle 5, via the axle 6 of the front wheel 1 and the axle 7 of the rear wheels 2. In addition to that, also other parts of the infant stroller may provide the connection between the two frame halves 3 and 4.

Referring in particular to the right-hand frame half 4, it can be seen that each frame half is built up of a pusher tube 8, a front leg 10 connected thereto by means of a first pivot 9, a rear leg 12 connected to the pusher tube 8 by means of a second pivot 11, and a connecting tube 15, which is on the one hand connected to the front leg by means of a third pivot 13 and which is on the other hand connected to the rear leg 12 by means of a fourth pivot 14.

A seat plate 16 for an infant is pivotally connected to the front leg 10, by means of a pivot pin 17, in the immediate vicinity of the first pivot 9, whilst the opposite end of the seat plate 16 is locked to the rear leg 12, in a manner yet to be described, in the illustrated, fully unfolded position of the infant stroller.

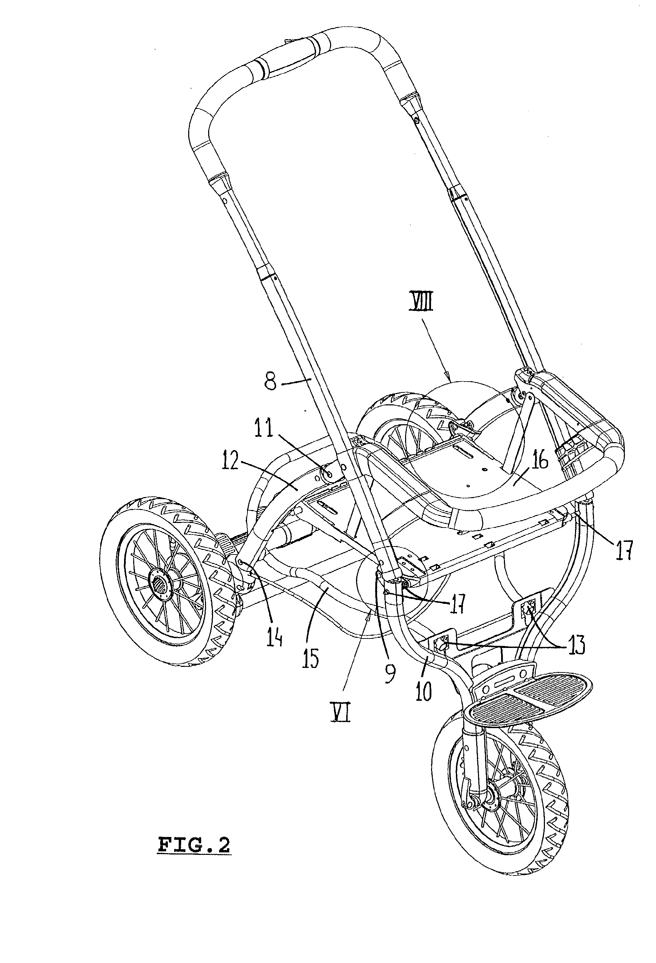

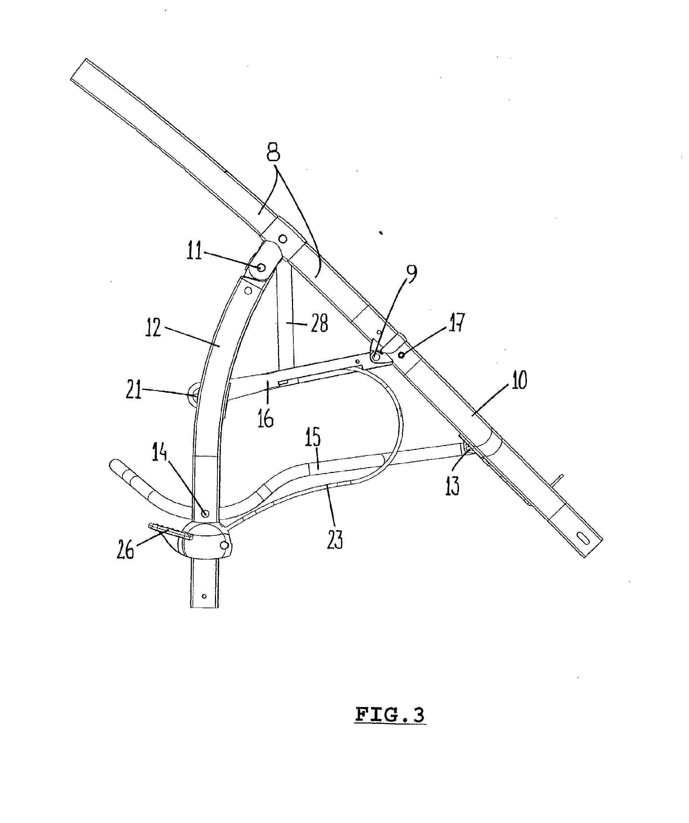

The pusher tube 8, the front leg 10, the rear leg 12 and the seat plate 16 and their intermediate pivots 9,11,13 and 14 form a four-sided linkage, by means of which the frame of the infant stroller can be collapsed. Fig. 2 shows the initial stage of such a collapsing movement. Said figure clearly shows that the pusher tube 8 and the front leg 10 are no longer aligned, as is the case in Fig. 1. The collapsing movement, the initial stage of which is shown in Fig. 2, is shown more clearly in Figs. 3-5.

Fig. 3 is a larger-scale side elevation of the detail of the infant stroller that is shown in Fig. 1. The four-sided linkage formed by the pusher tube 8, the front leg 10, the rear leg 12 and the connecting tube 15 with the intermediate pivots 9,11,13 and 14 takes up a position in which the infant stroller is fully unfolded. The pusher tube 8 and the front leg 10 are substantially aligned. The seat plate 16 is pivotally connected to the upper end of the front leg 10 at the location of the pivot pin 17, whilst the opposite end of the seat plate 16 engages the rear leg 12. Said engagement will be explained in more detail below.

As a result of its specific position, the seat plate 16 functions as a stabilisation member for the four-sided linkage. In particular, the seat plate 16 locks the pivot 9 in the illustrated pivoted position, thus preventing play in said pivot. As a result, an extremely stable position is achieved in the fully unfolded position of the infant stroller.

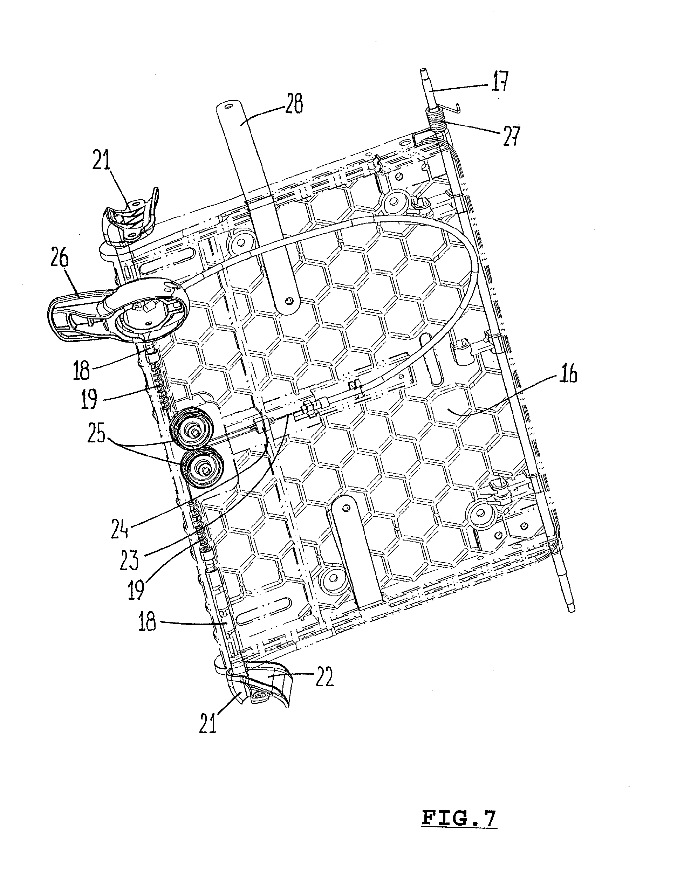

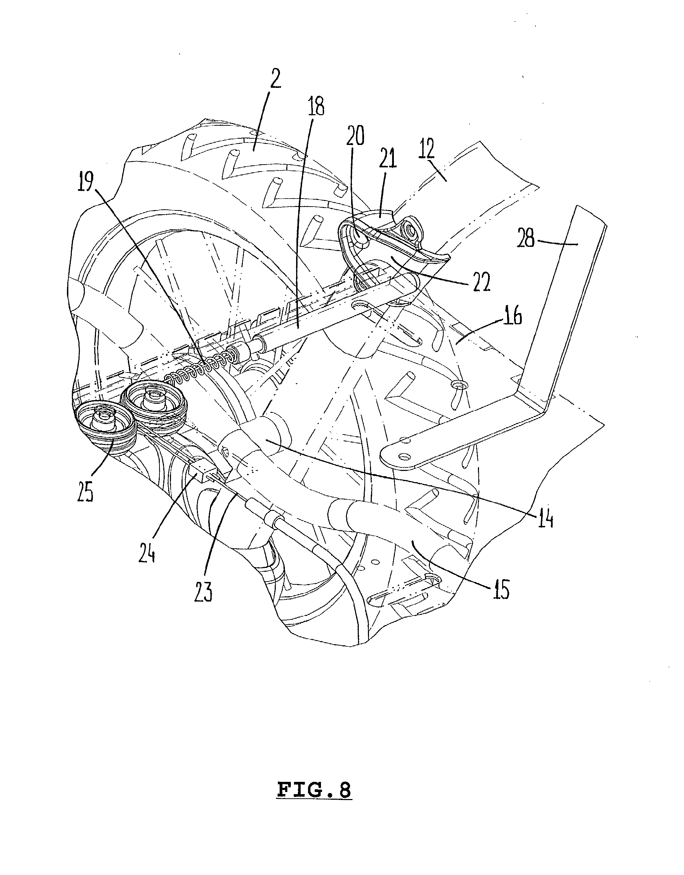

When the frame of the infant stroller is to be collapsed, the locking engagement between the seat plate 16 and the rear leg 12 must be released first. Reference is first made to Figs. 7 and 8 in this connection. The bottom view of Fig. 7 shows the seat plate 16 with the pivot pin 17 arranged at one end thereof, which pivot pin pivotally connects the seat plate 16 to the front leg 10. At the opposite end, the seat plate 16 carries two opposed pins 18 which are slidably guided in their longitudinal direction, which pins are each loaded in a direction away from each other by means of a compression spring 19. In the view of Fig. 8, one of said pins 18 and the associated compression spring 19 is shown. In the fully unfolded position of the infant stroller, each pin 18 can be received in a receiving hole 20 in an auxiliary member 21, which is fixed to the rear leg 12 (the receiving hole 20 might also be formed directly in the rear leg 12). The auxiliary member 21 is provided with a lead-in 21, which narrows in the direction of the receiving hole 20.

Referring to Fig. 7 again, the figure shows that a pull cable 23 splits up, via a dividing block 24, into two pull cable ends that are passed over pulleys 25, which cable ends engage the pins 18. The pull cable 23 is connected to a foot pedal 26, which is mounted on the rear leg 12 (see also Figs. 1,2,3,4 and 5).

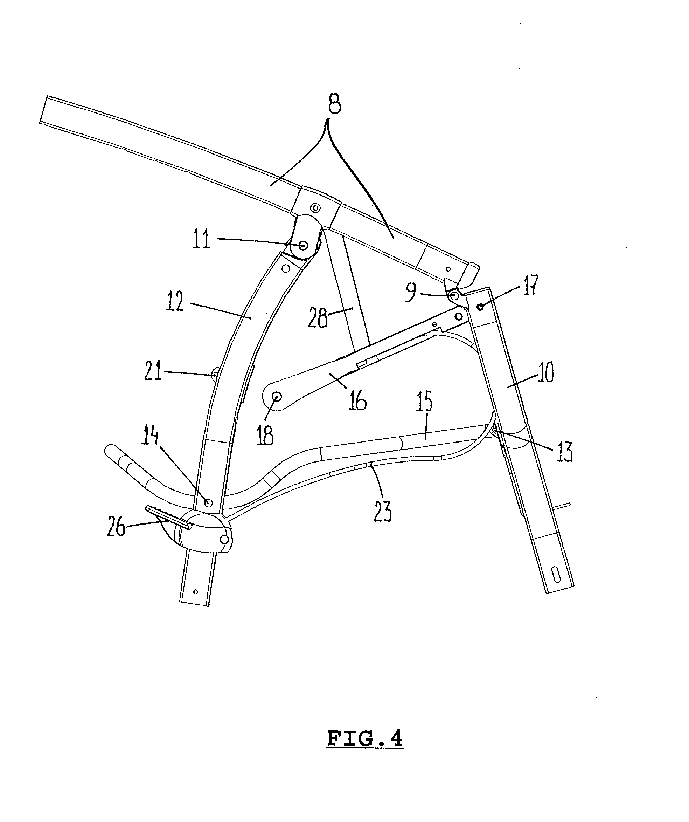

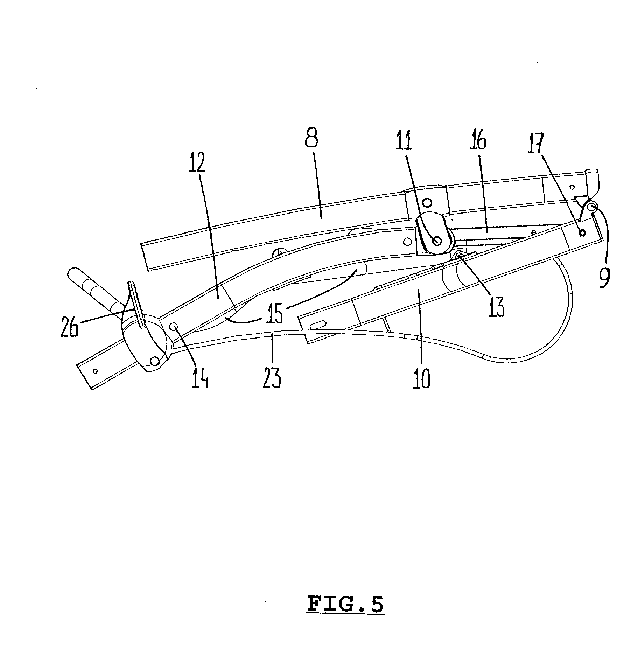

In the position of the frame as shown in Figs. 1 and 3, the pins 18 are received in the receiving holes 20 of the auxiliary members 21. The compression springs 19 retain the pins 18 in said receiving holes 20 in a reliable manner, so that the frame will remain in its stable, unfolded position. When the frame is to be collapsed, the foot pedal 26 is operated, as a result of which the pins 18 are moved in the direction towards each other (inwardly) against the spring force via the pull cable 23, thus moving out of the receiving holes 20. Following this, the frame can be collapsed, as is shown in Fig. 4. As the figure shows, the end of the seat plate 16 provided with the pins 18 moves clear of the rear leg 12. A continued pivoting movement will eventually lead to the fully collapsed position of the frame and the infant stroller that is shown in Fig. 5.

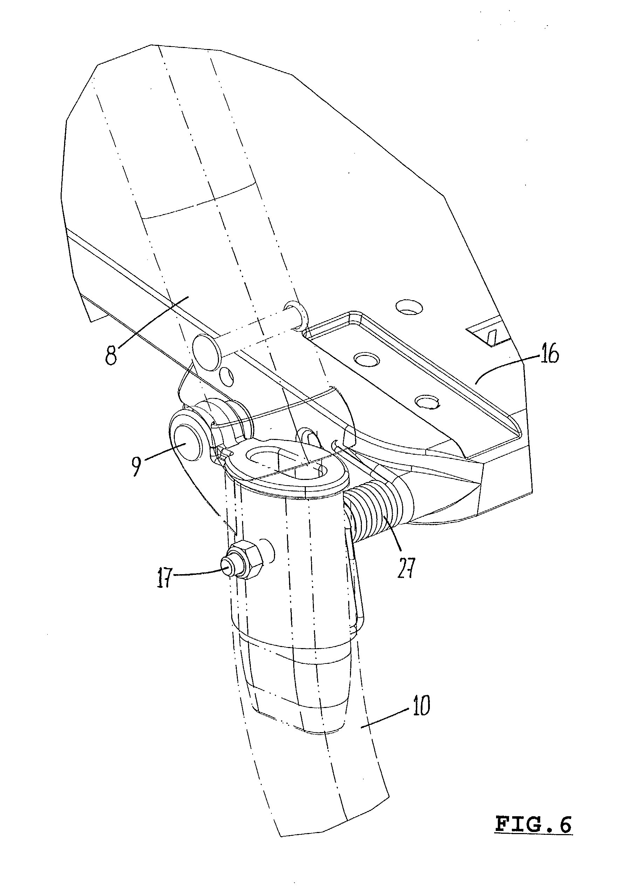

When the infant stroller is to be moved from the fully collapsed position as shown in Fig. 5 to the fully unfolded position (Figs. 1 and 3), it is convenient if the pins 18 are automatically positioned opposite the receiving holes 20 and the locking action takes place automatically. To this end, the position of the seat plate 16 carrying the plates 18 must be controlled so that the pins 18 move into the lead-in 22. In the illustrated embodiment, two measures are taken for that purpose. In the first place, a torsion spring 27 is arranged on the pivot pin 17 of the seat plate 16 (see Figs. 6 and 7), which loads the seat plate 16 in anti-clockwise direction, seen in Fig. 4, about the pivot pin 17. The force of gravity supports this movement of the seat plate 16. In a second place, the seat plate 16 is suspended from the pusher tube 8 by means of flexible connecting members 28. The flexible connecting member 28 functions as a stop that defines the extreme pivoted position of the seat plate 16 about the pivot pin 17. In that case, the length of the flexible connecting members 28 will be such that the pins 18 will move into a lead-in 22 when the frame is being unfolded. In the position that is shown in Fig. 5, the connecting members 28 are in their collapsed position, in which they are not visible.

In the illustrated embodiment of the infant stroller according to the invention, the seat plate 16 functions as a stabilisation member for the first pivot 9, and consequently for the aforesaid four-sided linkage. The function of the stabilisation member may be taken over by a separate rod or the like, however, and the seat member 16 may be positioned at another location in the frame.

The connecting tube 15 may form part of a luggage rack. The rear legs 12 may be extended towards the front at their upper ends, so as to provide a safety bracket 29 (see Figs. 1 and 2) for a child. Other parts of the infant stroller, such as a footrest 30, are of a conventional type and will not be explained in more detail herein.

The invention is not restricted to the embodiment as described above, which can be varied in many ways within the scope of the invention as defined in the claims. Thus, the position of the stabilisation member (which may or may not be the seat plate 16) may vary. Depending on the specific geometry of the infant stroller to which the invention relates, it is also possible to stabilise another pivot in the manner according to the invention. In such a case the designations front leg, pusher tube, rear leg and connecting tube are interchanged in a manner which is not further indicated. The frame parts of the four-sided linkage that is formed need not necessarily be aligned at the location of said pivot in that case, although the stabilisation of a pivot between elements being substantially aligned will generally have the greatest stabilising effect.

## Claims

1. A collapsible infant stroller comprising a frame which consists of a left-hand frame half and a right-hand frame half connected thereto, which frame halves accommodate a seat member for a child between them and which carry front and rear wheels at their bottom sides, in which a frame half is substantially built up of a four-sided linkage consisting of a pusher tube, a front leg connected thereto by means of a first pivot, a rear leg connected to the pusher tube by means of a second pivot, and a connecting tube which is on the one hand connected to the front leg by means of a third pivot and which is on the other hand connected to the rear leg by means of a fourth pivot, and in which means are used for locking the first pivot in position, for example in a position in which the pusher tube and the front leg are substantially aligned, **characterized in that** said means include a stabilisation member for effecting a fixed connection in the aforesaid position between a part of the pusher tube or the front leg located in the immediate vicinity of the first pivot on the one hand and the connecting tube or the rear leg on the other hand.

2. An infant stroller according to claim 1, wherein said stabilisation member extends between the front leg and the rear leg in the aforesaid position.

3. An infant stroller according to claim 1 or 2, wherein the stabilisation member is pivotally connected to the aforesaid part of the pusher tube or the front leg with a first end, whilst the second end of said stabilisation member and the connecting tube or the rear leg are provided with locking means which cooperate in the aforesaid position.

4. An infant stroller according to claim 3, wherein the locking means consist of a spring-loaded locking pin, which can be received in a corresponding receiving hole.

5. An infant stroller according to claim 4, wherein the locking pin forms part of the stabilisation member, and said receiving hole is formed in the connecting tube or in the rear leg.

6. An infant stroller according to claim 4 or 5, wherein the locking pin can be moved against the spring load by an operating element in order to be unlocked.

7. An infant stroller according to claim 6, wherein the operating element is a foot pedal connected to the locking pin by means of a pull cable.

8. An infant stroller according to any one of the claims 3-7, wherein guide means are used for positioning the cooperating locking means with respect to each other.

9. An infant stroller according to claim 8 in conjunction with any one of the claims 4-7, wherein the guide means include a lead-in for the locking pin.

10. An infant stroller according to claim 8 or 9, wherein the guide means include a spring member, such as a torsion spring, which spring member loads the stabilisation member in the direction of a pivoted position defined by a stop.

11. An infant stroller according to claim 10, wherein said stop is a flexible pull element, which forms a connection between the stabilisation member and a part of the frame which is located thereabove in a position of use of the infant stroller.

12. An infant stroller according to any one of the preceding claims, wherein the stabilisation member forms part of the seat member.
